# EUROPEAN PATENT SPECIFICATION

(11) **EP 2 056 136 B1**
(45) Date of publication and mention of the grant of the patent: **07.03.2012**
(21) Application number: 08160194.0
(22) Date of filing: 11.07.2008
(51) Int. Cl.: G02B 6/00, G02B 6/42, F21V 8/00, F21V 7/04, F21V 5/02

(54) **Lighting Lamp**
Leuchte
Lampe d'éclairage

(30) Priority: 01.11.2007 TW 96218471 U
(43) Date of publication of application: 06.05.2009
(73) Proprietor: Kun Dian Photoelectric Enterprise Co., Lujhou City 247 (TW)
(72) Inventor: Lee, Cheng Sheng, 247, Lujhou City (TW)
(74) Representative: Viering, Jentschura & Partner

(56) References cited:
- EP-A1- 1 132 678
- EP-A2- 1 167 870
- EP-A2- 1 184 619
- EP-A2- 2 037 301
- WO-A1-2005/019725
- WO-A1-2007/087710
- TW-U- M 306 666
- TW-U- M 317 546
- US-A- 3 568 177
- US-A- 5 136 483

## Description

### BACKGROUND OF THE INVENTION

### 1. Field of the Invention:

The present invention relates to lighting fixtures and more specifically, to a lighting lamp, which uses a polygonal light guide board with an umbrella surface-like reflective layer to guide light from LEDs so as to provide a uniform lighting effect having an enhanced brightness without multi-image and flashing and to simulate the lighting effect of a ball lamp.

### 2. Description of the Related Art:

LEDs (light emitting diodes) have been intensively used in lighting fixtures to substitute for conventional lamp bulbs and tubes for the advantages of small size, quick reaction time, low attenuation, hard surface structure, shock resistance, full-color emission (including invisible light), directional design applicability, low voltage, low current, low conversion loss, low radiation heat, easy mass production, and environmental protection. Following fast growth of market demand, blue, new fabrication techniques for white and high brightness LEDs have been continuously developed.

Many experts in different countries issued reports that declare the possibility of the application of LED techniques for regular illumination. Using LEDs to replace conventional lamp bulbs and lamp tubes for home use can save the power capacity of one nuclear plant in a country. Every country around the world invests manpower and capital to promote the development of LED technology. It has become an internal competition in development of LED technology.

However, LEDs may be too dim in bright light situations because of its unidirectional lighting feature. Therefore, a LED lighting fixture has the drawback of limited angle of illumination. To overcome this problem, multiple LEDs may be arranged together and set in different angles. However, this arrangement greatly complicates the fabrication of the lighting fixture and will also increase the cost. Further, a lighting fixture constructed according to this arrangement may produce multiple images, not practical to substitute for conventional daylight lamps.

In EP 1 184 619 A2 a lighting lamp is disclosed comprising a cavity, a circular shaped light guide board mounted inside the cavity and a plurality of LEDs mounted within said cavity outside said light guide board.

In US 5 136 483 A a lighting lamp is described comprising a circular shaped light guide board with a clear transmission layer at a front side thereof and a reflective layer covered on a back side thereof, wherein the reflective layer slopes from the periphery towards the center thereof.

Taiwan Patent Publication No. M306666 discloses a light guide structure for lighting lamp, which is an invention of the present inventor. According to this design, the light guide structure comprises a light guide board made of a transmissive material having a clear transmissive layer, and a reflective layer covered on the back side of the light guide board. The reflective layer has an arched convex portion on the middle (see claim 7). The light guide structure is used with a lateral light source to construct a lighting lamp that increases the angle of illumination, provides a uniform lighting effect with enhanced brightness, and eliminates the multi-image and flashing problems of conventional daylight lamps.

Taiwan Patent Publication No. M317546 discloses an improved structure of lighting fixture, which is an invention of the present inventor. According to this design, the lighting fixture comprises a lamp case, a plurality of LEDs mounted in the lamp case and adapted to emit light toward the center of the lamp case, a see-through window at the bottom side of the lamp case, a reflective board mounted inside the lamp case corresponding to the see-through window. The reflective board has a double-beveled edge at each end. When the LEDs are emitting light, light rays are well dispersed subject to the effect of the reflective board, providing stable illumination and eliminating the problem of multiple-image.

However, the aforesaid two prior art designs are functional, however they are simply suitable for bar illumination, not practical for use as a circular ceiling lamp or ball lamp.

### SUMMARY OF THE INVENTION

The present invention has been accomplished under the circumstances in view. It is the main object of the present invention to provide a lighting lamp, which uses a polygonal light guide board with an umbrella surface-like reflective layer to match with LEDs, thereby providing a uniform lighting effect having an enhanced brightness without multi-image and simulating the lighting effect of ball lamp.

To achieve this and other objects of the present invention, the lighting lamp comprises a cavity that can be directly formed in a lamp holder, a piece of furniture, a utensil or the construction of a building, a light guide board mounted inside the cavity, and a set of LEDs. The light guide board is a polygonal board made of a high transmissive material, comprising a clear transmission layer at the front side and a reflective layer at the back side. The reflective layer has the shape of an umbrella surface, and slopes from the periphery toward the center thereof. The LEDs are mounted within the cavity outside the light guide board and adapted to emit light laterally into the inside of the light guide board to provide a uniform lighting effect having an enhanced brightness without causing multi-image and to simulate the lighting effect of a ball lamp.

### BRIEF DESCRIPTION OF THE DRAWINGS

FIG. 1 is a schematic sectional plain view of a lighting fixture in accordance with the present invention.
FIG. 2 is a schematic sectional side plain view of the present invention, showing the lighting lamp installed in the cavity of a lamp holder.
FIG. 3 is a schematic top plain view of the present invention, showing the lighting lamp installed in the cavity of the lamp holder.
FIG. 4 is a perspective view of the light guide board of the lighting lamp in accordance with the present invention.
FIG. 5 is a schematic plain view showing the structure of the light guide board of the lighting lamp in accordance with the present invention.
FIG. 6 is a schematic drawing showing an operation status of the lighting lamp in accordance with the present invention.
FIG. 7 corresponds to FIG. 5 but showing an alternate form of the light guide board.
FIG. 8 is a schematic drawing showing an application example of the present invention.
FIG. 9 is a schematic drawing showing another application example of the present invention.

### DETAILED DESCRIPTION OF THE PREFERRED EMBODIMENT

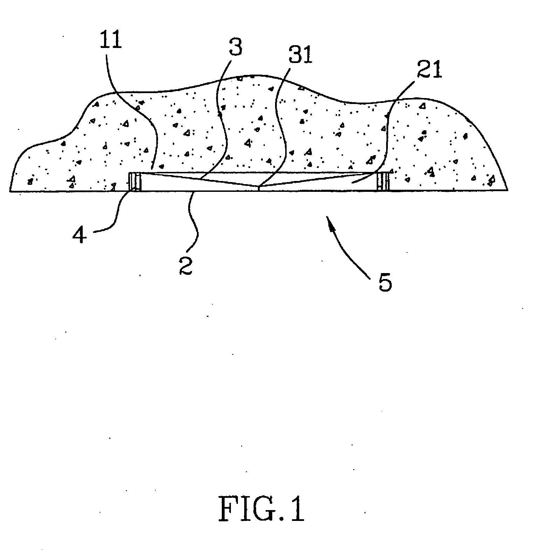

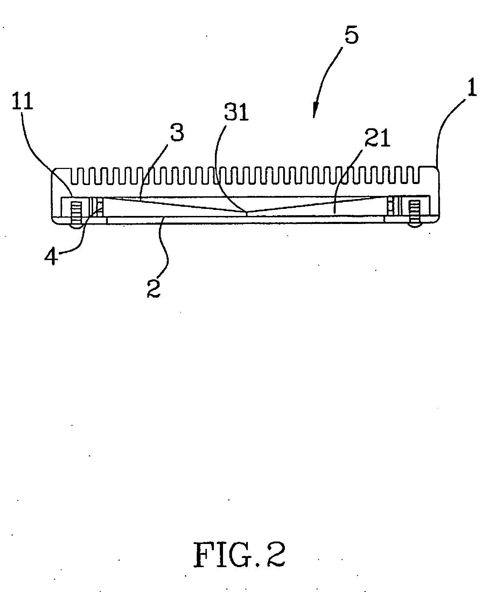

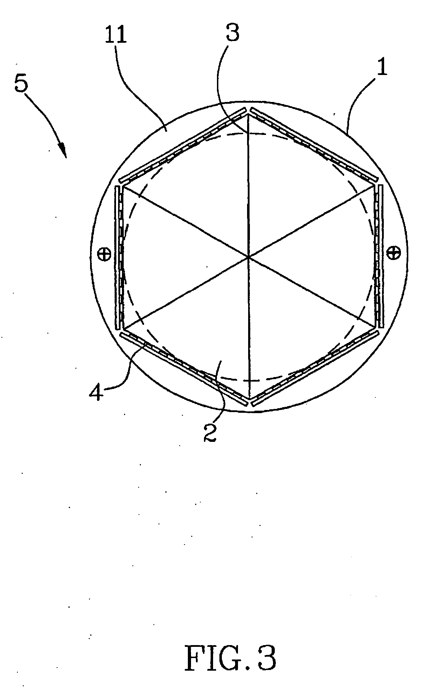

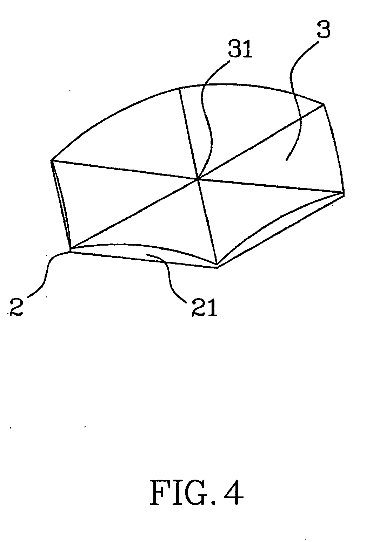

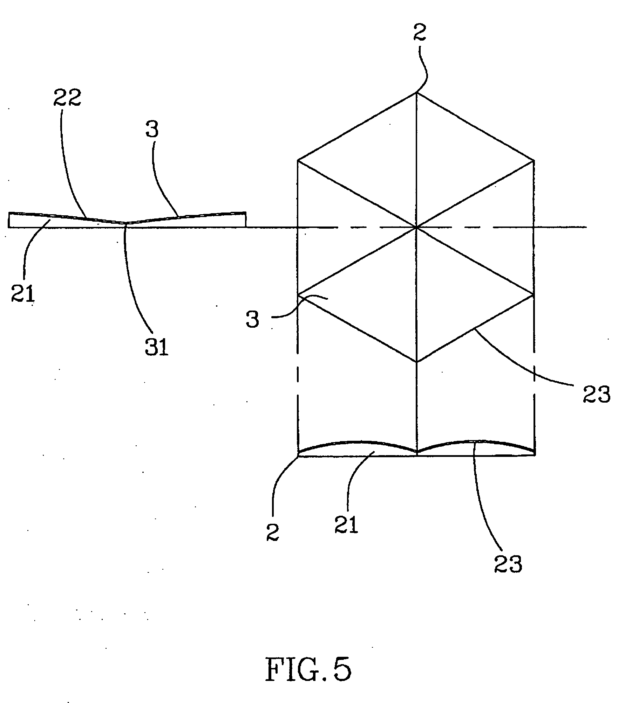

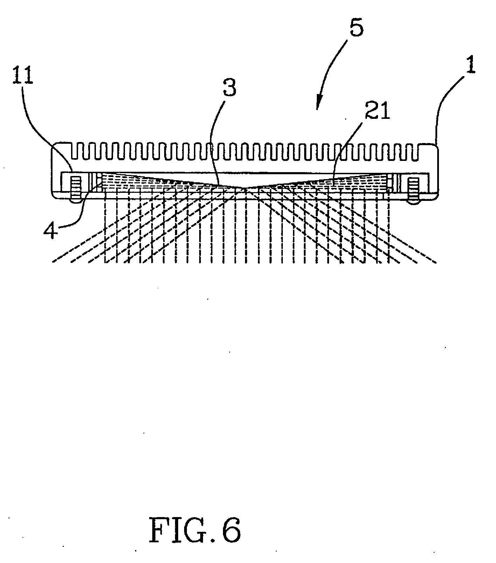

Referring to FIGS. 1-6, a lighting lamp 5 in accordance with a first embodiment of the present invention is shown comprising a cavity 11, a light guide board 2, and a set of LEDs (light emitting diodes) 4.

The cavity 11 may be directly formed in a lamp holder 1, a piece of furniture, a utensil, or the construction of a building.

The light guide board 2 is a polygonal member made of a high transmissive material and mounted inside the cavity 11, having a clear transmissive layer 21 at the front side and a continuous piece of reflective layer 3 at the back side. The reflective layer 3 has the shape of an umbrella surface, i.e., the surface of the reflective layer 3 slopes from the periphery toward the center 31.

In an example of the present invention, the light guide board 2 is a hexagonal member having an umbrella surface-like back surface 22 curved inwards at the back side, and the reflective layer 3 is directly covered on the umbrella surface-like back surface 22. The umbrella surface-like back surface 22 is divided into 6 equal smoothly curved triangularly shaped panels 23. The smoothly curved triangularly shaped panels 23 curves outwards and slopes downwardly toward the center 31 of the reflective layer 3. The inwardly curved back side design of the light guide board 2 diminishes material consumption.

The LEDs 4 are mounted within the cavity 11 outside the light guide board 2, and adapted to emit light through the light guide board 2 laterally.

As shown in FIGS. 1, 2 and 6, after installation of the lighting lamp 5, the LEDs 4 are turned on to emit light toward the inside of the light guide board 2 from two opposite lateral sides. When light rays go through the light guide board 2, the reflective layer 3 reflects light rays from the LEDs 4 toward the center of the light guide board 2, eliminating multi-image, enhancing the brightness, and simulating the lighting effect of a ball lamp.

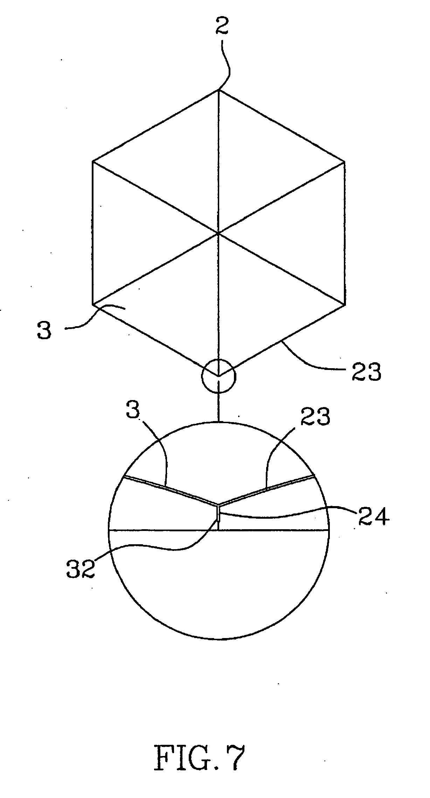

Referring to FIG. 7, a downwardly extending narrow cut 24 is provided in between each two adjacent smoothly curved triangularly shaped panels 23, and the reflective layer 3 has a plurality of light blocking protruding portions 32 respectively engaged into the downwardly extending narrow cut 24 between each two adjacent smoothly curved triangularly shaped panels 23 to prevent dispersion of reflected light through the six peripheral sides.

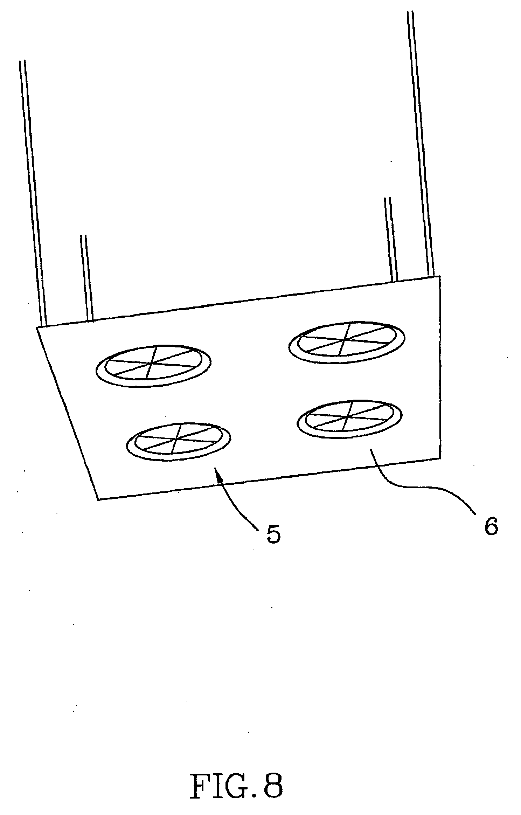

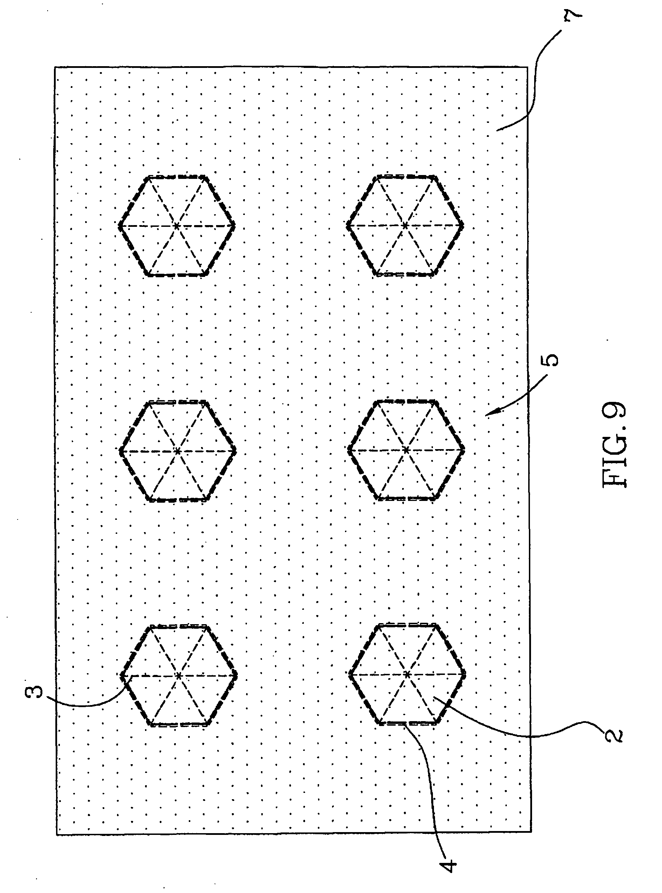

Because the invention simulates the lighting effect of a ball lamp, it makes up for the shortcoming of the aforesaid two prior art designs, broadening the application range of the lighting fixture. In addition to the use as an embedded lamp, multiple lighting lamps 5 can be arranged in an array on a mounting board 6, forming a ceiling lamp assembly as shown in FIG.8. FIG. 9 shows another application example of the present invention in which a frosted glass board 7 is provided in front of an array of lighting lamps 5 for use as a backlight module in a liquid crystal display screen.

Although particular embodiments of the invention have been described in detail for purposes of illustration, various modifications and enhancements may be made without departing from the scope of the invention. Accordingly, the invention is not to be limited except as by the appended claims.

## Claims

1. A lighting lamp comprising:
a cavity (11);
a light guide board (2) mounted inside said cavity (11), said light guide board (2) being made of a highly transmissive material, said light guide board (2) comprising a clear transmission layer (21) at a front side thereof ;
a plurality of LEDs (4) mounted within said cavity (11) outside said light guide board (2) and adapted to emit light laterally into the inside of said light guide board (2) to provide a uniform lighting effect having an enhanced brightness without causing multi-image and to simulate the lighting effect of a ball lamp;
**characterized in that**
said light guide board (2) is a polygonal board and said light guide board (2) comprises a reflective layer (3) covered on a back side thereof, said reflective layer (3) having the shape of an umbrella surface and sloping from the periphery toward the center (31) thereof,
wherein said reflective layer (3) fits over the polygonal shape of said light guide board (2); said light guide board (2) is divided into multiple smoothly curved triangularly shaped panels (23), said smoothly curved triangularly shaped panels (23) curving outwards and sloping downwardly toward the center (31) of said reflective layer (3).

2. The lighting lamp as claimed in claim 1, wherein said reflective layer (3) comprises a plurality of downwardly extending light blocking protruding portions (32) respectively engaged into a respective downwardly extending narrow cut (24) between each two adjacent smoothly curved triangularly shaped panels (23) of said light guide board (2).

3. A lighting lamp as claimed in claim 1, wherein the cavity (11) is formed in a lamp holder (1).

4. The lighting lamp as claimed in claim 3, wherein multiple lighting lamps are arranged in an array in a mounting board (6) for use as a ceiling lighting fixture.

5. The lighting lamp as claimed in claim 3, wherein a frosted glass is provided in front of an array of multiple lighting lamps .

6. A lighting lamp as claimed in claim 1, wherein the polygonal board is a hexagonal board, said clear transmission layer (21) having a back surface (22) shaped like an umbrella surface and sloping from the periphery toward the center (31) thereof, said reflective layer (3) being covered on said umbrella-like back surface (22) of said clear transmission layer (21), said umbrella surface-like back surface (22) being divided into six smoothly curved triangularly shaped panels (23).

## Patentansprüche

1. Eine Leuchte umfassend:
ein Gehäuse (11);
eine Lichtführungsplatte (2), welche in dem Gehäuse (11) befestigt ist, wobei die L'tchtführungsplatte (2) aus einem hoch lichtdurchlässigen Material ausgebildet ist, wobei die Lichtführungsplatte (2) an einer Vorderseite eine klare Transmissionsschicht (21) aufweist;
eine Vielzahl von LEDs (4), welche innerhalb des Gehäuses (11) außerhalb der Lichtführungsplatte (2) befestigt sind und dazu dienen, Licht seitlich in das Innere der Lichtführungsplatte (2) auszustrahlen, um einen einheitlichen Lichteffekt zur Verfügung zu stellen, welcher eine erhöhte Helligkeit ohne einem Entstehen von Mehrfach-Bildern aufweist, und um einen Lichteffekt einer Kugellampe zu simulieren;
**dadurch gekennzeichnet, dass**
die Lichtführungsplatte (2) eine polygonal geformte Platte ist und die Lichtführungsplatte (2) eine reflektierende Schicht (3) aufweist, welche eine Rückseite der Lichtfiihrungsplatte (2) abdeckt, wobei die reflektierende Schicht (3) die Form einer Schirmfläche aufweist und von einer Umfangsfläche zu der Mitte (31) hin abfallend ausgebildet ist,
wobei die reflektierende Schicht (3) an die polygonale Form der Lichtführungsplatte (2) angepasst ist, wobei die Lichtführungsplatte (2) in mehrere leicht gekrümmte, dreieckig geformte Paneele (23) aufgeteilt ist, wobei die leicht gekrümmten, dreieckig geformten Paneele (23) nach außen gekrümmt sind und nach unten in Richtung der Mitte (31) der reflektierenden Schicht (3) geneigt ausgebildet sind.

2. Die Leuchte nach Anspruch 1, wobei die reflektierende Schicht (3) eine Vielzahl von sich nach unten erstreckenden, Licht blockierenden, vorstehenden Elementen (32) aufweist, welche jeweils in Eingriff stehen mit einer sich entsprechend nach unten erstreckenden, engen Ausnehmung (24), welche zwischen jeweils zwei benachbart zueinander angeordneten, leicht gekrümmten, dreieckig geformten Paneelen (23) der Lichtführungsplatte (2) ausgebildet ist.

3. Eine Leuchte nach Anspruch 1, wobei das Gehäuse (11) in einem Lampenhalter (1) ausgebildet ist.

4. Die Leuchte nach Anspruch 3, wobei zur Verwendung als eine Deckenbeleuchtung eine Vielzahl von Leuchten in einem Bereich in einer Montageplatte (6) angeordnet sind.

5. Die Leuchte nach Anspruch 3, wobei ein Milchglas vor einem Bereich einer Vielzahl von Leuchten angeordnet ist.

6. Eine Leuchte nach Anspruch 1, wobei die polygonal geformte Platte eine hexagonal geformte Platte ist, wobei die klare Transmissionsschicht (21) eine rückseitige Fläche (22) aufweist, welche wie eine Schirmfläche geformt ist und von einer Umfangsfläche zu der Mitte (31) hin abfallend ausgebildet ist, wobei die reflektierende Schicht (3) an der schirmähnlichen rückseitigen Fläche (22) von der klaren Transmissionsschicht (21) abgedeckt ist, wobei die schirmähnliche rückseitige Fläche (22) in sechs leicht gekrümmte, dreieckig geformte Paneele (23) aufgeteilt ist.

## Revendications

1. Lampe d'éclairage comprenant:
une cavité (11) ;
un panneau conduit de lumière (2) monté à l'intérieur de ladite cavité (11), ledit panneau conduit de lumière (2) étant réalisé dans un matériau très transmissif, ledit panneau conduit de lumière (2) comprenant une couche de transmission transparente (21) au niveau d'un côté avant de celui-ci ;
une pluralité de LED (4) montées à l'intérieur de ladite cavité (11) à l'extérieur dudit panneau conduit de lumière (2) et adaptées de façon à émettre de manière latérale une lumière dans l'intérieur dudit panneau conduit de lumière (2) de façon à fournir un effet d'éclairage uniforme qui présente une luminosité améliorée sans provoquer d'images multiples, et à simuler l'effet d'éclairage d'une lampe sphérique ;
**caractérisée en ce que** :
ledit panneau conduit de lumière (2) est un panneau polygonal et ledit panneau conduit de lumière (2) comprend une couche réfléchissante (3) couverte sur un côté arrière de celle-ci, ladite couche réfléchissante (3) présentant la forme d'une surface de parapluie et s'inclinant à partir de la périphérie vers le centre (31) de celle-ci ;
dans lequel ladite couche réfléchissants (3) s'adapte sur la forme polygonale dudit panneau conduit de lumière (2); ledit panneau conduit de lumière (2) est divisé en de multiples panneaux de forme triangulaire incurvés en douceur (23), lesdits panneaux de forme triangulaire incurvés en douceur (23) s'incurvant vers l'extérieur et étant en pente vers le bas vers le centre (31) de ladite couche réfléchissante (3).

2. Lampe d'éclairage selon la revendication 1, dans lequel ladite couche réfléchissante (3) comprend une pluralité de parties saillantes qui bloquent la lumière et qui s'étendent vers le bas (32) respectivement en prise dans une découpe étroite qui s'étend vers le bas respective (24) entre chaque deux panneaux de forme triangulaire incurvés en douceur (23) adjacents dudit panneau conduit de lumière (2).

3. Lampe d'éclairage selon la revendication 1, dans lequel la cavité (11) est formée dans un support de lampe (1).

4. Lampe d'éclairage selon la revendication 3, dans lequel de multiples lampes d'éclairage sont agencées en un réseau dans un panneau de montage (6) pour une utilisation en tant qu'appareil d'éclairage au plafond.

5. Lampe d'éclairage selon la revendication 3, dans lequel un verre dépoli au sable est fourni devant un réseau de multiples lampes d'éclairage.

6. Lampe d'éclairage selon la revendication 1, dans lequel le panneau polygonal est un panneau hexagonal, ladite couche de transmission transparente (21) présentant une surface arrière (22) formée de la même façon qu'une surface de parapluie et étant en pente à partir de la périphérie vers le centre (31) de celle-ci, ladite couche réfléchissante (3) étant recouverte sur ladite surface arrière similaire à une surface de parapluie (22) de ladite couche de transmission transparente (21), ladite surface arrière similaire à une surface de parapluie (22) étant divisée en six panneaux de forme triangulaire incurvés en douceur (23).
